(19) **Europäisches Patentamt / European Patent Office / Office européen des brevets**

(11) **EP 2 145 663 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **08160574.3**

(22) Anmeldetag: **16.07.2008**

(51) Int Cl.:
*B01D 46/00* (2006.01)   *B01D 53/54* (2006.01)
*B01D 53/56* (2006.01)   *B01J 23/00* (2006.01)
*B01J 23/745* (2006.01)   *B01J 23/83* (2006.01)
*B01J 35/04* (2006.01)   *B01J 37/02* (2006.01)
*C01B 21/26* (2006.01)   *C01B 21/28* (2006.01)

(54) **Katalysator zur Umsetzung von Distickstoffmonoxid und seine Verwendung bei der industriellen Salpetersäureherstellung**

Catalyst for converting nitrous oxide and its application in industrial nitric acid production

Catalyseur destiné à la conversion d'oxyde nitreux et son utilisation dans la fabrication industrielle d'acide nitrique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**20.01.2010 Patentblatt 2010/03**

(73) Patentinhaber: **Umicore AG & Co. KG**
**63457 Hanau-Wolfgang (DE)**

(72) Erfinder:
• **Schlett, Mathias**
**63741 Aschaffenburg (DE)**

• **Neumann, Juergen**
**63571 Gelnhausen (DE)**

(56) Entgegenhaltungen:
EP-A- 1 408 018   WO-A-97/37760
WO-A-2004/096703   WO-A-2007/104403
US-A- 4 774 217   US-A1- 2005 201 906

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Katalysator zur Umsetzung von Distickstoffmonoxid, der als katalytisch aktive Komponente(n) eine oder mehrere Verbindungen vom Perowskit-Typ enthält sowie seine Verwendung zur Umsetzung von Distickstoffmonoxid, welches als unerwünschtes Nebenprodukt bei der industriellen Herstellung von Salpetersäure nach dem Ostwald Verfahren gebildet wird.

Beim Ostwald-Verfahren wird ein Gemisch aus Ammoniak ($NH_3$) und Luft bei Drücken von 1 bis 15 bar, Temperaturen von 780 bis 950 °C und Gasgeschwindigkeiten von 0,5 bis 12 m/s durch einen gasdurchlässigen Edelmetall-Netz-Katalysator auf Basis von Platinlegierungen geführt. Abhängig von der Gasgeschwindigkeit besteht der Edelmetall-Netz-Katalysator aus Paketen von 3 bis zu 50 direkt aufeinanderliegenden Edelmetallnetzen. An diesem Katalysator wird Ammoniak ($NH_3$) mit Luftsauerstoff ($O_2$) katalytisch umgesetzt zu Stickstoffmonoxid (NO) und Wasser ($H_2O$).

Als unerwünschtes Nebenprodukt wird bei dieser Reaktion ein Gemisch von Stickoxiden ($NO_x$) und Distickstoffmonoxid ($N_2O$) gebildet. Das gewünschte Produkt NO wird in weiterer Abfolge der Prozeßschritte an einem Wärmetauscher unterhalb des Edelmetall-Netz-Katalysators abgekühlt, mit überschüssigem Sauerstoff zu Stickstoffdioxid ($NO_2$) oxidiert und danach in Wasser als Salpetersäure absorbiert. Das verbleibende gasförmige Gemisch an Stickoxiden wird an einem sogenannten "DeNOx" Katalysator unter Zugabe eines Brennstoffs, zumeist Ammoniak, zu den unkritischen Komponenten Stickstoff ($N_2$) und Wasser ($H_2O$) umgesetzt. Distickstoffmonoxid wird in diesen Prozeßschritten nicht absorbiert oder zersetzt. Ohne eine nachgeschaltete Stufe zu seiner Umsetzung gelangt es in einer Menge von 4 bis 15 kg pro produzierter Tonne Salpetersäure unzersetzt in die Atmosphäre.

Distickstoffmonoxid ist ein starkes "Treibhausgas". Sein Kohlendioxidäquivalent beträgt 310. Die Salpetersäure-Industrie ist damit eine der hauptsächlichen industriellen Quellen für den direkten Eintrag dieses klimaschädlichen Gases in die Atmosphäre. Es ist daher Gegenstand der Forschung und Entwicklung, Maßnahmen und Verfahren bereitzustellen mit welchen die Emission von Distickstoffmonoxid bei der Salpetersäureherstellung vermindert werden kann.

Katalysatoren zur Umsetzung von Distickstoffmonoxid sind bekannt. Bei der Salpetersäureherstellung werden sie bevorzugt in der Hochtemperaturzone der Ammoniakoxidation stromabwärts direkt unterhalb des Edelmetall-Netz-Katalysators und vor dem Wärmetauscher zum Abkühlen des Prozeßgases angeordnet. Auf Grund ihrer Anordnung nach dem Katalysator für die Ammoniakoxidation werden sie im Verfahren zur Salpetersäureherstellung als Sekundärkatalysatoren bezeichnet.

In der WO 99/07638 A1 wird ein Verfahren zur Herstellung von Salpetersäure beschrieben, bei dem Ammoniak an Katalysatornetzen unter Zufuhr von Sauerstoff verbrannt wird. Im Prozeßgas enthaltenes Distickstoffmonoxid wird stromab der Katalysatornetze und vor Kühlung an einem Wärmetauscher über einen Katalysator geführt, der in Form einer Schüttung von Katalysatorelementen oder eines gasdurchlässigen Formkatalysators, wie zum Beispiel eines Wabenkatalysators, vorliegt. Als Aktivkomponente wird vorzugsweise ein Edelmetall oder eine Keramik gewählt. Einsetzbar sind auch Spinelle und/oder Perowskite.

In der WO 00/023176 A1 wird ein kupferhaltiger Katalysator zur Zersetzung von $N_2O$ beschrieben, der eine Verbindung der allgemeinen Formel $M_xAl_2O_4$, in der M Cu oder Mischungen von Cu mit Zn und/oder Mg bedeutet und worin x einen Wert von 0,8 bis 1,5 aufweist. Bei dem Katalysator handelt es sich im wesentlichen um einen Spinell, der in geringem Ausmaß Oxide enthalten kann. Der Katalysator kann in Form von Pellets, Waben, Ringen, Splitt, Voll- und Hohlsträngen oder auch in anderen geometrischen Formen vorliegen.

In der WO 02/002230 A1 wird ein Katalysator zur Zersetzung von $N_2O$ beschrieben, der auf einem Träger aus Ceroxid eine aktive Komponente der Zusammensetzung 0,1 - 10 mol-% $Co_{3-x}M_xO_4$ enthält, wobei M Fe oder Al ist und x = 0 - 2 beträgt. Der Katalysator kann zusätzlich auch 0,01 - 2 Gew.-% $ZrO_2$ beinhalten. Die Form des Katalysatorträgers und seine Materialzusammensetzung sind nicht näher beschrieben.

In der US 7,192,566 B2 wird ein Katalysator zur $N_2O$-Zersetzung beschrieben, der aus einer festen Lösung eines Mischoxides von Zirkon (Zr) und Cer (Ce) besteht. Er wird zur Zersetzung von $N_2O$ aus dem Prozeßgas der Salpetersäure-Herstellung eingesetzt und wird unterhalb des letzten Platinnetzes zur Oxidation von Ammoniak angeordnet. Die Form des Katalysators ist nicht näher spezifiziert.

In der DE 10 2004 024 026 A1 wird ein Katalysator zur Zersetzung von $N_2O$ in der industriellen Salpetersäureherstellung beschrieben, der einen Träger aufweist und eine darauf aufgebrachte Beschichtung aus Rhodium-, Rhodium/Palladium- oder Rhodiumoxid. Als Trägermaterialien werden $Al_2O_3$, $ZrO_2$, $CeO_2$ oder eine Mischung davon genannt. Der Katalysator kann in Form von Pellets, Raschig-Ringen, Schaum- oder Wabenstrukturen vorliegen. In den Ausführungsbeispielen werden Raschig-Ringe, Kanthalnetze, extrudierte Stränge, alpha- und gamma-$Al_2O_3$ Pearls eingesetzt.

In der DE 198 41 740 A1 wird ein keramischer Katalysator zur selektiven Zersetzung von $N_2O$ beschrieben, der aus einem porösen keramischen Trägermaterial und einer katalytisch aktiven Phase besteht, wobei das Trägermaterial zu mindestens 95 Masse-% aus einer oder mehreren Erdalkaliverbindungen besteht. Die aktive Phase kann aus einem oder mehreren Oxiden und/oder Mischoxiden der Elemente Cr, Mn, Fe, Co, Ni, Cu, Zn, Ga, In, Ag, Ti, Y, Zr, La, Ca, Sr und Ba bestehen. Hieraus können Katalysatorelemente in Gestalt von Granulaten, Schüttgut oder Wabenkörpern gefertigt werden.

In der DE 103 28 278 A1 wird ein Verfahren zur Zersetzung von $N_2O$ beschrieben, wobei als Katalysatoren mit katalytisch aktiven Materialien beschichtete Raumkörper eingesetzt werden, insbesondere Drahtgewebe und/oder -gestricke, die mit katalytisch aktiven Materialien beschichtet sind.

In der WO 2007/104403 A1 der Anmelderin wird ein Katalysator für die Zersetzung von $N_2O$ beschrieben, der einen Tragkörper in Wabenform und eine Verbindung vom Perowskit-Typ der allgemeinen Formel (1)

$$M^1M^2_{1-x}M^3_xO_3 \qquad (1)$$

umfaßt, wobei x von 0,05 bis 0,9 beträgt, $M^1$ aus La, Ce, Nd, Pr, Sm und Kombinationen davon, $M^2$ aus Fe, Ni und Kombinationen davon und $M^3$ aus Cu, Co, Mn und Kombinationen davon ausgewählt ist. Die Verbindung vom Perowskit-Typ kann erfindungsgemäß in verschiedenen Formen als Katalysator eingesetzt werden. Die Verbindung vom Perowskit-Typ kann beispielsweise als solches in Form regelmäßig oder unregelmäßig geformter Teilchen (Pulver, Granulat, Pellets) eingesetzt werden. In einer anderen Ausführungsform wird die Verbindung vom Perowskit-Typ in Kombination mit einem Tragkörper eingesetzt. Der Tragkörper kann jede bekannte Form aufweisen. So sind u.a. Pellets, Kugeln oder Wabenkörper möglich. In einer bevorzugten Ausführungsform werden Tragkörper in Wabenform verwendet. Gemäß dieser Offenlegungsschrift kann die Verbindung vom Perowskit-Typ in das Material des Tragkörpers inkorporiert sein, der Tragkörper kann mit der Verbindung vom Perowskit-Typ imprägniert sein oder der Tragkörper kann eine Oberflächenbeschichtung ("washcoat") aufweisen, die die Verbindung vom Perowskit-Typ enthält.

Wie schon beschrieben, werden die Katalysatoren zur Umsetzung von Distickstoffmonoxid bevorzugt zwischen den Katalysatornetzen zur Ammoniakoxidation und dem Wärmetauscher für die Prozeßgaskühlung angeordnet. Die Betriebsbedingungen an diesem Ort sind gekennzeichnet durch Arbeitstemperaturen zwischen 750 bis 1000 °C, Gasgeschwindigkeiten von 0,5 bis 12 m/s und Drücken von 1 bis 15 bar. Darüber hinaus wird bei einer Notabschaltung des Reaktors die Arbeitstemperatur in wenigen Minuten auf unter 200 °C abgesenkt. Ähnlich schnelle Temperaturänderungen treten auch beim An- und Abfahren des Reaktors für die Ammoniakoxidation auf. Die Katalysatoren müssen also nicht nur langzeitstabil unter hohen Arbeitstemperaturen sein, sondern auch noch eine hohe Thermoschockresistenz aufweisen.

US 2005/201906 zeigt ein katalytisches Abgassystem. Es wird in einem zweiten Katalysatorabschnitt ein keramischer Oxidschaum verwendet, der eine Perowskit-Oberfläche besitzt.

EP-A-1408018 zeigt ein Verfahren zur Herstellung geträgerter Perowskite für verschiedene Zwecke. Die Trägermaterialien können Wabenstrukturen oder Schäume sein. Die Perowskite können auch selbst als offenporig Schaumstrukturen verwendet werden.

WO 97/37760 zeigt einen Katalysator, der der vollständig aus einer Perowskitverbindung besteht und zur Kohlenmonoxid-Oxidation, Kohlenwasserstoff-Oxidation sowie der Stickstoffdioxid- und Schwefeldioxid-Oxidation verwendet werden kann.

US-4774217 zeigt ein Verfahren zur Herstellung von keramischen Schäumen durch Abformen eines Polyurethanschaums mit keramischem Material und Imprägnieren mit einer katalytisch aktiven Schicht.

WO 2004/096703 zeigt die Herstellung und Verwendung einer Katalysatorenanordnung zur Herstellung von Salpetersäure und Entfernung der Stickoxide. Als Katalysator zur Entfernung der Stickoxide wird unter Anderem ein Perowskit beschrieben. Als Träger können Wabenkörper und Schäume eingesetzt werden.

Von den Erfindern wurden daher umfangreiche Testreihen zur Überprüfung verschiedener Katalysatortypen auf ihre Eignung für den geplanten Einsatz durchgeführt. Dabei zeigte sich, daß katalytisch aktive Komponenten auf der Basis von Edelmetallen bei den genannten Arbeitstemperaturen eine schleichende, irreversible Deaktivierung durch Sinterprozesse erleiden. Auch aluminiumoxidhaltige Trägerkatalysatoren mit einer Beschichtung von aktiven Komponenten auf der Basis von Übergangsmetalloxiden zeigen eine schleichende Alterung durch Reaktion dieser Oxide mit den aluminiumoxidhaltigen Trägermaterialien zu Aluminaten oder Spinellen.

Zur weitgehenden Vermeidung dieser Reaktionen werden heutzutage überwiegend Extrudate in Form von Strängen oder Pellets als Festbett eingesetzt, in seltenen Fällen auch extrudierte Wabenkörper, die ganz oder zum überwiegenden Teil aus der katalytisch aktiven Komponente bestehen. Solche Formkörper, insbesondere kleinere Stränge, Granalien oder Hohlzylinder, sind zudem ausreichend temperaturstabil und thermoschockresistent. Dünnwandige Wabenkörper weisen dagegen auf Grund ihrer monolithischen Form nur eine eingeschränkte Thermoschockresistenz auf, das heißt unter Thermoschockbedingungen vergrößern sich im Wabenkörper vorhandene Mikrorisse und können nach einer gewissen Anzahl wiederholter Thermoschockbedingungen zu einer Spaltung des Wabenkörpers führen.

Aufgabe der Erfindung war es daher, einen Katalysator zur selektiven Umsetzung von Distickstoffmonoxid aus dem Prozeßgas der Ammoniakoxidation zu entwickeln, der neben einer hohen mechanischen und thermischen Stabilität eine hohe Thermoschockresistenz aufweist, eine geringe Alterung zeigt und nur einen geringen Strömungswiderstand bei möglichst hoher geometrischer Oberfläche für die Prozeßgasströmung aufweist.

Diese Aufgabe wird durch einen Katalysator gemäß Anspruch 1 gelöst. Die Verwendung des Katalysators im Verfahren zur Herstellung von Salpetersäure wird in Anspruch 7 beschrieben. Bevorzugte Ausführungsformen des Katalysators und seiner Verwendung sind Gegenstand der entsprechenden abhängigen Patentansprüche.

Die vorliegende Erfindung betrifft daher einen Katalysator zur Umsetzung von Distickstoffmonoxid, der als katalytisch aktive Komponente(n) eine oder mehrere Verbindungen vom Perowskit-Typ enthält, die katalytisch aktiven Komponenten in Form wenigstens einer Schicht auf einem Tragkörper aus einer offenzelligen Schaumkeramik aufgebracht sind, die aus dünnwandigen Hohlstegen eines keramischen Materials aufgebaut ist, **dadurch gekennzeichnet, daß** dem als keramisches Trägermaterial verwendeten Sintermullit zur Abformung des Polyurethanschaums ein Anteil von 5 bis 40 Gew.-% an katalytisch aktiver Komponente zugefügt wird. Die Hohlstege können einen Durchmesser von 100 - 750 $\mu$m mit einer Wanddicke von 50 - 250 $\mu$m aufweisen. Das Raumgewicht der Schaumkeramik kann (abhängig von Zelldichte und Wanddicken der Hohlstege) zwischen 0,1 und 1 kg/dm$^3$ betragen, das Gewicht der aktiven Beschichtung zwischen 10 und 60 Gew.-% bezogen auf das Raumgewicht des fertigen Katalysators.

Die katalytisch aktive Komponente ist vorteilhaft eine Verbindung mit der Summenformel LnFeO$_3$ wobei Ln Lanthanoide ausgewählt aus La, Ce, Nd, Pr und Sm bezeichnet. Die Schaumkeramik weist vorteilhaft eine Porosität von 60-95% auf und kann durch Abformung eines offenzelligen Polyurethanschaums mit einem keramischen Material erhalten werden, der eine Porengröße zwischen 10 und 50 ppi (Poren pro Inch) bzw. 4 bis 20 Poren pro cm besitzt.

Die Erfindung betrifft auch die Verwendung des Katalysators gemäß der Erfindung zur Umsetzung von Distickstoffmonoxid, welches als unerwünschtes Nebenprodukt bei der Herstellung von Salpetersäure gebildet wird, wobei ein Gemisch aus Ammoniak und Luft zuerst über einen Katalysator zur Oxidation von Ammoniak und das dabei gebildete Produktgas in direkter Folge anschließend über den Katalysator zur Umsetzung von Distickstoffmonoxid geführt wird. Als Katalysator zur Oxidation von Ammoniak kann ein Edelmetall-Netz-Katalysator verwendet werden, vorteilhaft dient der Katalysator der Erfindung als ebene Auflage für den Edelmetall-Netz-Katalysator.

Der Katalysator zur Umsetzung von Distickstoffmonoxid enthält als katalytisch aktive Komponente(n) eine oder mehrere Verbindungen vom Perowskit-Typ. Er ist **dadurch gekennzeichnet, daß** die katalytisch aktiven Komponenten in Form wenigstens einer Schicht auf einem Tragkörper aus einer in alle Richtungen durchströmbaren, offenzelligen Schaumkeramik aufgebracht sind, die aus dünnwandigen Hohlstegen eines keramischen Materials aufgebaut ist.

Erfindungsgemäß wird ein aus dem Stand der Technik bekannter Katalysator für die Umsetzung von Distickstoffmonoxid als Beschichtung auf einem Tragkörper in Form eines offenzelligen, keramischen Schaums eingesetzt. Diese Lösung der gestellten Aufgabe basiert auf den Untersuchungen der Erfinder, die gezeigt haben, daß die Umsetzung von Distickstoffmonoxid unter den Betriebsbedingungen im Reaktor für die Ammoniakoxidation im wesentlichen nicht kinetisch beschränkt ist: die chemische Reaktion läuft an der Katalysatoroberfläche mit hoher Geschwindigkeit ab. Die Effizienz des Katalysators ist dagegen durch den Massentransport zu der und von der Katalysatoroberfläche begrenzt. Durch Verwendung einer offenzelligen Schaumkeramik als Träger für die katalytische Beschichtung wird eine hohe Quervermischung des Prozeßgases erzeugt und damit das Problem eines unzureichenden Massentransportes zu der und von der Katalysatoroberfläche gelöst.

Die im Stand der Technik beschriebenen Katalysatoren erwähnen zwar auch summarisch Schaumkeramiken als mögliche Träger für die katalytisch aktiven Komponenten, die tatsächlich beschriebenen Ausführungsformen verwenden in der Katalysatorschicht jedoch überwiegend Katalysatorelemente in Form von Pellets, zylindrischen Hohlkörpern oder Wabenkörpern. Die Katalysatorschicht aus diesen Formkörpern wird primär axial durchströmt mit nur geringer Quervermischung des Prozeßgases. So bildet sich zum Beispiel in Wabenkörpern eine laminare Gasströmung aus, die wegen der Transportlimitierung der katalytischen Umsetzung von Distickstoffmonoxid die Wirksamkeit des Katalysators deutlich herabsetzt.

Der vorgeschlagene Katalysator verwendet dagegen eine spezielle, offenzellige Schaumkeramik als Träger für die katalytisch aktive Beschichtung. Die Schaumkeramik wird im wesentlichen gebildet durch miteinander verbundene Hohlstege, die durch Abformung eines offenzelligen Polyurethanschaums mit einem keramischen Material erhalten werden. Diese Art der Herstellung ermöglicht eine große Variabilität der geometrischen Eigenschaften der Schaumkeramik und somit die Anpassung der Strömungscharakteristik an die Gasgeschwindigkeiten von 0,5-12 m/s in dem betrachteten Verfahren.

Offenzellige Schaumkeramiken, ihre Herstellung und ihre Anwendung als katalytische Packungen werden ausführlich beschrieben in "Offenzellige Schaumkeramik, Teil 1" von J. Adler und G. Standke, Keramische Zeitschrift 55 (2003) [9] und in "Keramische Schwämme - Anwendungspotenzial monolithischer Netzstrukturen als katalytische Packungen" von A. Reitzmann, F. C. Patcas und B. Kraushaar-Czarnetzki, Chemie Ingenieur Technik 2006, 78, No. 7.

Diese beiden Übersichtsartikel zeigen, daß es viele Herstellverfahren für offenzellige Schaumkeramiken gibt. Die Eigenschaften der damit hergestellten Schaumkeramiken weisen entsprechend große Unterschiede auf.

Für die Zwecke der Erfindung hat sich eine Schaumkeramik als besonders vorteilhaft erwiesen, die durch Abformung eines offenzelligen Polyurethanschaums mit einem keramischen Material erhalten wird. Dieses Verfahren wurde zuerst von Schwartzwalder in dem US-Patent US 3,090,094 beschrieben und erzeugt eine Schaumkeramik aus miteinander verbundenen Hohlstegen. Bei diesem Verfahren wird ein Polymerschaum mit einer wäßrigen Suspension keramischer Partikel getränkt. Danach wird der getränkte Polymerschaum mechanisch ausgepreßt und getrocknet.

Anschließend wird der Polymerschaum ausgebrannt und die zurückbleibende keramische Beschichtung gesintert. Durch das Ausbrennen des Polymerschaums sind die Stege der sich ergebende Schaumstruktur hohl. Die Querschnitte sowohl der Stege als auch ihrer Hohlräume sind dreieckförmig.

Der als Vorläufer der offenzelligen Schaumkeramik verwendete Polyurethanschaum ist mit definierter Porosität, festgelegt durch seine ppi-Zahl (pores per inch), erhältlich. Er besteht aus Polyurethanstegen, die durch ihr Zusammentreffen in Verknüpfungspunkten eine von den Stegen umrahmte pentagonale offene Fläche bilden. Mehrere dieser durch Stege gebildeten offenen Flächen bilden eine dodekaedrische Zelle. Der Durchmesser der pentagonalen offenen Flächen entspricht in etwa einem Drittel der dodekaedrischen Zellen. Solche dodekaedrischen Zellen pflanzen sich über gemeinsame Kanten und Flächen in einer offenzelligen, dreidimensionale Gitterstruktur vielfältig fort und bilden in ihrer Gesamtheit eine offenzellige Schaumstruktur.

Die keramische Suspension zur Tränkung des Polyurethanschaums kann neben dem eigentlichen Keramikpulver auch Sinteradditive und Binder enthalten. Weitere Zuschlagstoffe sind organische Komponenten oder Graphit, die beim Kalzinieren verbrennen und eine mikroporöse Struktur der späteren Oberfläche erzeugen. Graphit kann der Suspension zum Beispiel in einer Menge bis zu 6 Gew.-% bezogen auf der Gesamtgewicht der Feststoffe in der Suspension zugefügt werden.

Der Polyurethanschaum wird zur Tränkung in die keramische Suspension getaucht. Anschließend wird überschüssige Suspension durch Walzen vom getränkten Polyurethanschaum entfernt, um zu verhindern, daß es zu Porenverschlüssen kommt. Mittels der Zusammensetzung der keramischen Suspension, ihrer Viskosität und der definierten Walzenabstände, in Abhängigkeit der Stärke des Polyurethanschaums, wird die aufzubringende Schichtdicke der keramischen Suspension festgelegt. Der getränkte Polyurethanschaum wird in einem Ofen zuerst sorgfältig getrocknet. Anschließend wird der Polyurethanschaum ausgebrannt und die zurückbleibende keramische Schaumstruktur bei Temperaturen von gewöhnlich über 1000, bevorzugt zwischen 1200 und 1250 °C, während einer Dauer von mehreren Stunden gesintert.

Als keramische Komponenten zur Herstellung der Schaumstruktur eignen sich zum Beispiel Aluminiumoxid, Zirkonoxid, Siliziumkarbid, Siliziumoxid, Lithiumaluminiumsilikate oder Mischungen davon. Als besonders vorteilhaft hat sich als keramikbildende Substanz ein Gemisch von Aluminiumoxid und Siliziumoxid erwiesen. Besonders bevorzugt ist eine als Sintermullit bezeichnete Mischung aus Aluminiumoxid und Siliziumoxid mit der Zusammensetzung $3Al_2O_3 \cdot 2SiO_2$. Sintermullit zeichnet sich durch eine gute Haftung auf den Polyurethanstegen während der Fertigung der Schaumstruktur aus. Sintermullit zeichnet sich darüber hinaus durch eine geringe Wärmeausdehnung, eine hohe mechanische Stabilität und eine hohe Thermoschockfestigkeit aus. Ein offenzelliger keramischer Schaum aus Sintermullit ist daher besonders geeignet für den Einsatz in der Hochtemperaturzone des Salpetersäureverfahrens.

Porosität und Porengröße des fertigen keramischen Schaums lassen sich in weiten Grenzen durch entsprechende Auswahl des Polyurethanschaums variieren und somit an die im Reaktor auftretenden Gasgeschwindigkeiten optimal anpassen. Für die Zwecke der Erfindung haben sich Porositäten zwischen 60 und 95 % und Porengrößen von 10 bis 50 ppi bewährt - entsprechend 4 bis 20 Poren pro cm. Hierbei ist anzumerken, daß sich die Angaben zur Porengröße nicht auf die fertige Schaumkeramik beziehen, sondern auf die entsprechenden Größen des für die Abformung verwendeten Polyurethanschaums.

Die Wahl der Porosität der fertigen Schaumkeramik hängt von den im Betrieb zu erwartenden Gasgeschwindigkeiten ab. Je höher die Gasgeschwindigkeit ist um so größer sollte die Porosität der Schaumkeramik sein.

Die Hohlstege der Schaumkeramik weisen bevorzugt einen Durchmesser von 100 bis 750 $\mu$m mit einer Wanddicke zwischen 50 und 250 $\mu$m auf. Das Raumgewicht der Schaumkeramik beträgt abhängig von der Zelldichte und den Wanddicken der Hohlstege zwischen 0,1 und 1 kg/dm$^3$.

Das Raumgewicht der Schaumkeramik kann bei vorgegebener Zellgröße des verwendeten Polyurethanschaums in gewissen Grenzen verändert werden. Mit zunehmendem Raumgewicht werden Schaumkeramiken erhalten, die einen höheren Anteil von verschlossenen pentagonalen Flächen der dodekaedrischen Zellen aufweisen. Damit erhöht sich der Strömungswiderstand der Schaumkeramik für das Prozeßgas. Es hat sich aber gezeigt, daß dieser Effekt auch vorteilhaft ausgenutzt werden kann, denn die verschlossenen pentagonalen Flächen wirken wie Strömungsleitflächen, die zur Quervermischung des Prozeßgases beitragen. Die dadurch erzeugten Querströmungen in der offenzelligen Schaumstruktur erhöhen den konvektiven Massentransport zum und vom Katalysator, wodurch dieser eine weit höhere katalytische Effizienz im Vergleich zu herkömmlichen Trägerstrukturen wie Granulaten, zylindrischen Hohlkörper, Waben oder anders geformten monolithischen Formkörpern aufweist.

Außerdem erhöht sich mit zunehmender Zahl verschlossener pentagonaler Flächen auch die mechanische Festigkeit der Schaumkeramik. Allerdings muß darauf geachtet werden, daß nicht zu viele pentagonale Flächen der dodekaedrischen Zellen verschlossen werden und den Strömungswiderstand der Schaumkeramik unzulässig erhöhen.

Die katalytisch aktiven Komponenten zur Umsetzung von Distickstoffmonoxid werden in Form einer Beschichtung auf die Schaumstruktur aufgebracht. Bevorzugt werden hierfür die in der Offenlegungsschrift der Anmelderin mit der Veröffentlichungsnummer WO 2007/104403 A1 beschriebenen Komponenten verwendet. Es handelt sich dabei um Verbindungen vom Perowskit-Typ der allgemeinen Formel (1)

$$M^1M^2_{1-x}M^3_xO_3, \qquad (1)$$

wobei x von 0,05 bis 0,9 beträgt, $M^1$ aus La, Ce, Nd, Pr, Sm und Kombinationen davon, $M^2$ aus Fe, Ni und Kombinationen davon und $M^3$ aus Cu, Co, Mn und Kombinationen davon ausgewählt ist. Besonders bevorzugt wird eine katalytisch aktive Komponente entsprechend der Summenformel $LnFeO_3$ aus einem Gemisch von Lanthanoiden (Ln) mit Eisenoxid verwendet, wobei die Lanthanoide ausgewählt sind aus La, Ce, Nd, Pr und Sm. Ein Vorteil dieser im wesentlichen aus Eisenoxid bestehenden katalytisch aktiven Komponente ist ihr relativ geringer Preis. Darüber hinaus gibt es mit diesem Katalysator keine Probleme bei der Entsorgung, da er keine Schwermetalle wie Kobalt oder Kupfer enthält.

Die aktive Komponente wird in einer Menge von 10 bis 60 Gew.-%, bezogen auf das Raumgewicht des fertigen Schaumkatalysators, in einer oder mehreren Schichten aufgebracht. Zur Beschichtung kann die Schaumkeramik in eine Beschichtungssuspension getaucht werden, die ein Gemisch der katalytisch aktiven Komponente mit Salpetersäure, Wasser und Aluminiumoxid als Bindemittel enthält. Anschließend wird die überschüssige Suspension aus der Schaumkeramik abgesaugt.

Durch Wahl der Viskosität der Beschichtungssuspension, der Intensität der Absaugung und der Anzahl der Tauchvorgänge läßt sich die Schichtdicke der aufgebrachten aktiven Komponente zwischen etwa 10 und 150 $\mu$m variieren. Die Beschichtung wird danach getrocknet und anschließend gesintert. Die Trocknung kann zum Beispiel bei 150 bis 250 °C für die Dauer von 5 bis 10 Minuten vorgenommen werden. Die Temperatur während der Versinterung der Beschichtung beträgt bevorzugt 900 °C. Während des Sinterns baut die Beschichtung eine feste Verbindung zu dem Trägermaterial aus Sintermullit auf.

Unter den Betriebsbedingungen im Reaktor für die Ammoniakoxidation kommt es zu einer langsam voranschreitenden Reaktion zwischen der aktiven Komponente und dem Aluminiumoxidanteil des Trägermaterials zu Aluminaten und Spinellen und dadurch zu einer Abnahme der katalytischen Aktivität. Es wurde gefunden, daß diese Reaktion vermindert werden kann, wenn dem als keramisches Trägermaterial verwendeten Sintermullits zur Abformung des Polyurethanschaums ein gewisser Anteil von 5 bis 40 Gew.-% an katalytisch aktiver Komponente zugefügt wird. Das ist wegen des geringen Preises der auf Eisenoxid beruhenden katalytisch aktiven Komponente ohne weiteres möglich. Der Aluminiumoxidanteil des Sintermullits kann dann mit der im Trägermaterial vorhandenen katalytisch aktiven Komponente reagieren. Dadurch wird die als Beschichtung vorliegende katalytisch aktive Komponente geschützt.

Der beschriebene Katalysator wird bevorzugt zur Umsetzung von Distickstoffmonoxid verwendet, welches als unerwünschtes Nebenprodukt bei der Herstellung von Salpetersäure gebildet wird, wobei ein Gemisch aus Ammoniak und Luft zuerst über einen Katalysator zur Oxidation von Ammoniak und das dabei gebildete Prozeßgas in direkter Folge anschließend über den Katalysator zur Umsetzung von Distickstoffmonoxid geführt wird. Üblicherweise wird hierbei für die Oxidation von Ammoniak ein Edelmetall-Netz-Katalysator verwendet.

Der Katalysator für die Umsetzung von Distickstoffmonoxid befindet sich bei dieser Verwendung in der Hochtemperaturzone der katalytischen Ammoniakoxidation und ist somit neben hohen Temperaturen auch häufigen Thermoschockbedingungen ausgesetzt. Der erfindungsgemäße Katalysator mit einer Schaumstruktur widersteht diesen widrigen Betriebsbedingungen durch die hohe Festigkeit der aus anorganischen Materialien aufgebauten hohlen Gitterstege und durch den geringen Wärmeausdehnungskoeffizienten dieser Materialien. Außerdem kann der Katalysator in diesem Verfahren als formstabiler und gleichmäßig ebener Träger für den Edelmetall-Netz-Katalysator zur Ammoniakoxidation verwendet werden.

Die folgenden Beispiele und Figuren dienen zur weiteren Erläuterung der Erfindung. Es zeigen

**Figur 1:** Querschnitt durch einen keramischen Hohlsteg

**Figur 2:** Druckverlustmessungen an offenzelligen keramischen Schäumen mit vergleichbaren Wandstärken von 90 bis 110 $\mu$m basierend auf Polymergrundkörpern verschiedener ppi-Zahlen

**Figur 3:** Druckverluste von offenzelligen keramischen Schäumen und von Kugelschüttungen in Abhängigkeit ihrer geometrischen Oberflä- che bei einer Gasgeschwindigkeit von 1 m/s

**Figur 4:** Druckverluste von offenzelligen keramischen Schäumen in Ab- hängigkeit der Gasgeschwindigkeit bei unterschiedlichen Höhen der Schäume

**Beispiel 1**

Für die folgenden Untersuchungen wurde eine ganze Serie von offenzelligen plattenförmigen Schaumkatalysatoren mit 140 mm Breite, 160 mm Länge und 20 mm Höhe hergestellt.

Für die Schaumkeramik als Träger für die katalytische Beschichtung wurde eine Mischung aus 75 Gew.-%

Sintermullit, 20 Gew.-% katalytisch aktiver Komponente und 5 Gew.-% Graphit verwendet. Die aktive Komponente bestand aus einem perowskitischen Eisenoxidgemisch $LnFeO_3$ gemäß WO 2007/104403 A1, wobei die Lanthanoide Ln aus La, Ce, Nd und Pr gebildet wurden. Die Mischung des Trägermaterials wurde in Wasser suspendiert. Mit der Suspension wurde ein Polyurethanschaum mit einer Zellgröße von 20 ppi beschichtet, getrocknet und gesintert.

Nach Fertigstellung der Schaumkeramiken wurden sie mit einer Suspension der katalytisch aktiven Komponente beschichtet. Die fertigen Schaumkatalysatoren wiesen 36 Gew.-% katalytisch aktiver Beschichtung bezogen auf das Gesamtgewicht der Schaumkatalysatoren aus Schaumkeramik und katalytisch aktiver Komponente auf. Die fertigen Schaumkatalysatoren besaßen ein Raumgewicht von 0,52 kg/dm³ und wiesen etwa 2 geschlossene pentagonale Flächen pro dodekaedrischer Zelle auf.

An diesen Schaumkatalysatoren wurden verschiedene Untersuchungen durchgeführt.

**Struktur der Hohlstege:**

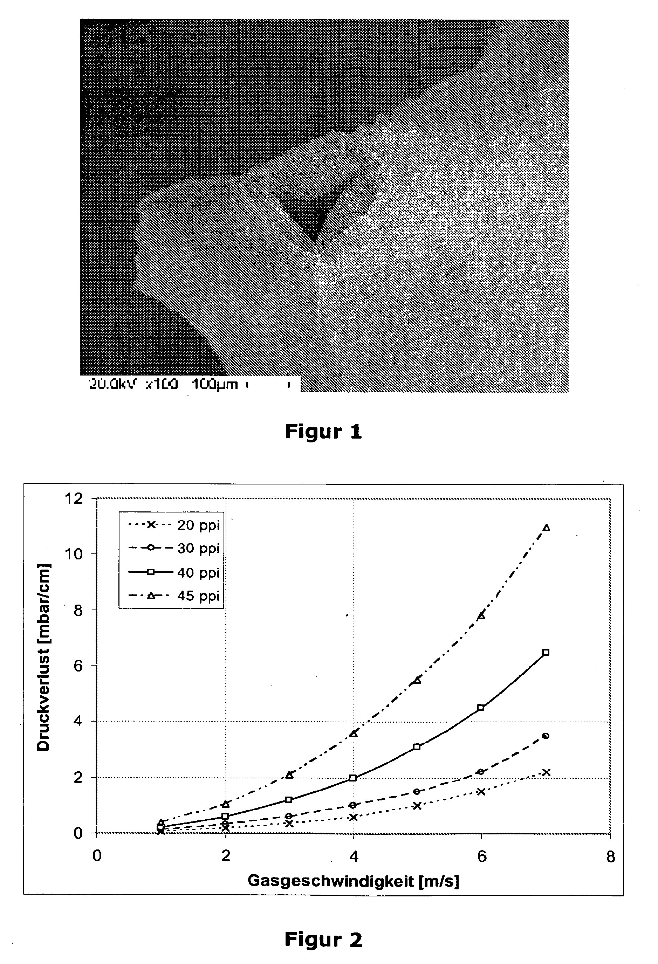

Figur 1 ist eine fotografische Aufnahme einer Bruchfläche durch einen Hohlsteg der Schaumkatalysatoren mit einem Rasterelektronenmikroskop. Das Foto zeigt deutlich den dreieckigen Querschnitt des im Steg befindlichen Hohlraums.

**Thermoschockfestigkeit:**

Zur Untersuchung der Thermoschockfestigkeit wurden die Katalysatorplatten in einen auf 950 °C vorgeheizten Ofen gestellt. Nach 15 Minuten wurden die Platten abrupt einer Raumtemperatur von etwa 25 °C ausgesetzt. Die Katalysatorplatten überstanden 50 Wiederholungen dieser Prozedur ohne makroskopisch sichtbare Risse, Brüche oder sonstige Minderung ihrer mechanischen Festigkeit.

Die Prüfung der Thermoschockfestigkeit wurde zum Vergleich auch an extrudierten Wabenkörpern gemäß der WO 2007/104403 A1 vorgenommen. Die Wabenkörper besaßen eine hexagonale Grundfläche mit einer Seitenlänge von 29 mm, einer Höhe von 51 mm und 600 dreieckigen Kanälen mit 2 mm Seitenlänge. Schon nach 10 bis 15 Wiederholungen wiesen 20% der Wabenkörper makroskopische Risse auf.

**Prüfung der katalytischen Aktivität**

Zur Prüfung der katalytischen Aktivität wurden aus den Katalysatorplatten 3 Scheiben mit jeweils 40 mm Durchmesser ausgebohrt und aufeinandergestapelt in einen Laborreaktor eingesetzt. Der Betriebsdruck des Laborreaktors betrug 7 bar. Die übereinandergestapelten Katalysatorplatten wurden mit einem Gasgemisch von 1500 ppm Distickstoffmonoxid in Helium bei 900 °C beaufschlagt. Die Gasgeschwindigkeit betrug vor Eintritt in die Katalysatorplatten 4 m/s. Die Konzentration von $N_2O$ hinter dem Reaktor betrug 525 ppm, was einer $N_2O$-Umsetzung von 65 % entspricht.

Zum Vergleich wurde ein Wabenkatalysator gemäß WO 2007/104403 A1 mit hexagonaler Grundfläche, einer Seitenlänge von 29 mm, einer Höhe von 51 mm und 600 dreieckigen Kanälen mit 2 mm Seitenlänge aus dem katalytisch aktiven Material der Schaumkatalysatoren hergestellt und unter denselben Bedingungen im Laborreaktor untersucht. Die $N_2O$-Konzentration nach dem Wabenkatalysator betrug 885 ppm, was einer $N_2O$-Umsetzung von 41% entspricht.

Die geometrische Oberfläche S des Schaumkatalysators wurde nach

$$S = \frac{4 \cdot \varepsilon}{d} \qquad\qquad (2)$$

berechnet, wobei ε der Leerraumanteil (Porosität) des Schaumkatalysators und d der Porendurchmesser ist.

Mit ε = 0,8 und d = 2 mm ergibt sich eine geometrische Oberfläche von 1600 m² bezogen auf 1 m³ Schaumkatalysator (1600 m²/m³). Die geometrische Oberfläche des Wabenkatalysators berechnet aus der Innenfläche der Kanäle betrug 1675 m²/m³.

Auf Grund der vergleichbaren Oberflächenwerte und der gleichen chemischen Zusammensetzung der Oberfläche kann gefolgert werden, daß die deutlich höhere $N_2O$-Umsetzung am Schaumkatalysator auf den intensiveren Kontakt des Prozeßgases mit der Katalysatoroberfläche infolge der turbulenten Gasströmung mit Quervermischung im Schaumkatalysator zurückzuführen ist.

**Beispiel 2**

Es wurden weitere Schaumkatalysatoren ausgehend von vier verschiedenen Polymerschäumen mit unterschiedlichen Porengrößen (20 ppi, 30 ppi, 40 ppi und 45 ppi) angefertigt. Hierbei kamen dieselben Materialien wie in Beispiel 1 zum Einsatz.

An diesen Katalysatoren wurde der Druckverlust in Abhängigkeit von der Gasgeschwindigkeit gemessen. Die Ergebnisse dieser Messungen sind in Figur 2 dargestellt.

Die Messungen zeigen, daß Druckverlust und geometrische Oberfläche der Schaumkatalysatoren durch die Porosität des Polymerkörpers und die Wandstärke der Hohlstege exakt eingestellt werden können. Die Wandstärken der Hohlstege sind dabei allerdings durch den Porendurchmesser (Zellgröße) begrenzt, da sonst der Anteil der blockierten Poren zu groß wird.

Im Gegensatz zu einer Schüttung von Festkörpern bildet im Falle der offenzelligen Schaumkeramik der Feststoff lediglich die porenbildenden Stege der Zellen, wodurch eine Quervermischung des Prozeßgases gewährleistet wird und zu einer optimierten Ausnutzung der Katalysatoroberfläche führt.

Die Schaumstruktur weist damit die sehr vorteilhafte Charakteristik einer hohen Oberfläche bei gleichsam geringem Widerstand auf, den sie dem Gasstrom entgegensetzt. Die hohe Offenzelligkeit bedingt eine sehr geringere Zunahme der Gasgeschwindigkeit und führt zu einer entsprechend hohe Verweilzeit in der Schaumstruktur.

**Beispiel 3**

Es wurden die Druckverluste von Schaumkatalysatoren und von Kugelschüttung für verschiedene geometrische Oberflächen im Volumenanteil miteinander verglichen.

Die geometrischen Oberflächen S wurden entsprechend Gleichung (2) berechnet.

Die geometrischen Oberflächen S der Kugelschüttungen wurden mit Hilfe von Gleichung (3) ermittelt

$$S = \frac{6}{d} \cdot (1 - \varepsilon) , \qquad\qquad (3)$$

wobei $\varepsilon$ der Leerraumanteil (Porosität) der Kugelschüttung und d der Kugeldurchmesser ist.

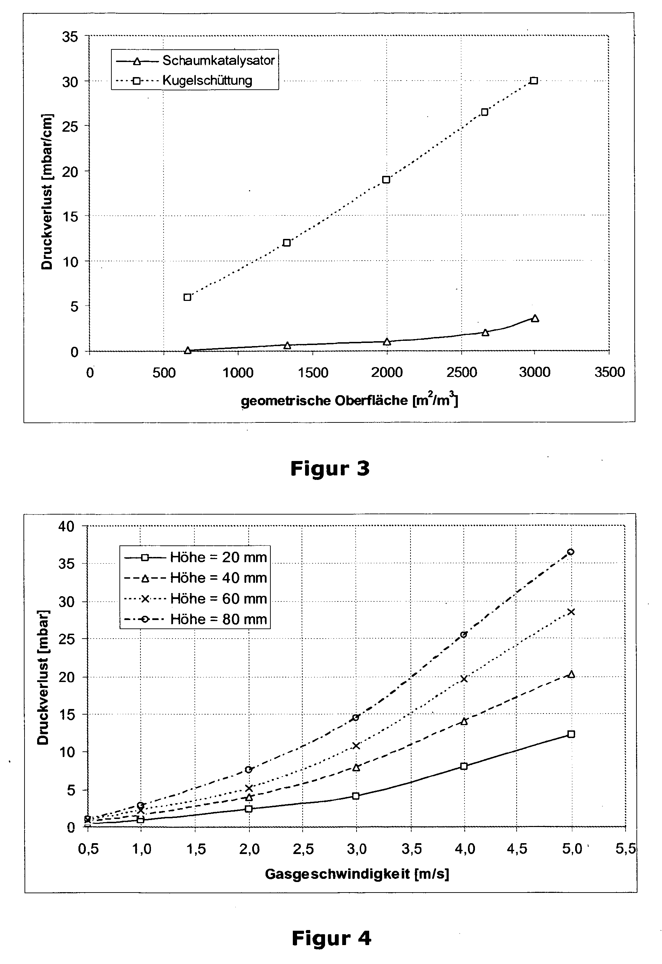

Die Ergebnisse dieser Vergleichsmessungen sind in Figur 3 grafisch dargestellt. Die Messungen zeigen den signifikant geringeren Druckverlust der Schaumkatalysatoren im Vergleich zu Kugelschüttungen bei gleicher geometrischer Oberfläche schon bei einer Gasgeschwindigkeit von 1 m/s.

**Beispiel 4**

An Stapeln von Katalysatorplatten von Beispiel 1 wurde der Druckverlust in Abhängigkeit von der Höhe des Katalysatorstapels für verschiedene Gasgeschwindigkeiten ermittelt. Die Meßergebnisse zeigt Figur 4.

Die Nichtlinearität der Druckverlustzunahme bei steigender Katalysatorbetthöhe verdeutlicht eine gewisse Vergleichmäßigung der Strömung beim Durchgang durch die aufeinanderfolgenden Schichten des Katalysators. Hier macht sich die Ausgleichswirkung der Gitterstruktur bemerkbar, die eine radiale Strömung des Gases zuläßt und damit eine Vermischung der Gasströmung beim Durchtritt durch den Katalysator. Ein Durchtritt von nicht umgesetzten Komponenten des Prozeßgases infolge von lokal stark unterschiedlichen Belastungen des Katalysators ist bei einer Gittergeometrie deutlich geringer als bei der Anwendung von Pellet-Schüttungen oder Wabenkörpern.

Selbst bei einer gleichförmigen Anströmung des Katalysators durch das Prozeßgas erzeugen unterschiedliche Schüttdichten in einem Festbett lokal verschiedene Druckverluste, die eine unterschiedliche Ausnutzung der Katalysatorschüttung bedingen. Die erfindungsgemäße Gitterstruktur erzeugt dagegen einen gleichförmigen Druckverlust über den Strömungsquerschnitt, womit eine gleichförmig hohe Ausnutzung der katalytisch wirksamen Oberfläche erreicht wird.

**Patentansprüche**

1. Katalysator zur Umsetzung von Distickstoffmonoxid, der als katalytisch aktive Komponente(n) eine oder mehrere Verbindungen vom Perowskit-Typ enthält, die katalytisch aktiven Komponenten in Form wenigstens einer Schicht auf einem Tragkörper aus einer offenzelligen Schaumkeramik aufgebracht sind, die aus dünnwandigen Hohlstegen eines keramischen Materials aufgebaut ist,
**dadurch gekennzeichnet,**
**daß** dem als keramisches Trägermaterial verwendeten Sintermullit zur Abformung des Polyurethanschaums ein Anteil von 5 bis 40 Gew.-% an katalytisch aktiver Komponente zugefügt wird.

**2.** Katalysator nach Anspruch 1,
**dadurch gekennzeichnet,**
**daß** die Schaumkeramik eine Porosität von 60-95% aufweist und durch Abformung eines offenzelligen Polyurethanschaums mit einem keramischen Material erhalten wurde, wobei der Polyurethanschaum eine Porengröße zwischen 10 und 50 ppi (Poren pro Inch) entsprechend zwischen 4 und 20 Poren pro cm besaß.

**3.** Katalysator nach einem der Ansprüche 1 bis 2,
**dadurch gekennzeichnet,**
**daß** die Hohlstege einen Durchmesser von 100 - 750 $\mu$m mit einer Wanddicke von 50 - 250 $\mu$m aufweisen.

**4.** Katalysator nach Anspruch 3,
**dadurch gekennzeichnet,**
**daß** das Raumgewicht der Schaumkeramik abhängig von der Zelldichte und den Wanddicken der Hohlstege zwischen 0,1 und 1 kg/dm$^3$ beträgt.

**5.** Katalysator nach Anspruch 4,
**dadurch gekennzeichnet,**
**daß** die katalytisch aktive Komponente eine Verbindung vom Perowskit-Typ mit der Summenformel LnFeO$_3$ ist, wobei Ln Lanthanoide bezeichnet, die ausgewählt sind aus La, Ce, Nd, Pr und Sm.

**6.** Katalysator nach Anspruch 5,
**dadurch gekennzeichnet,**
**daß** das Gewicht der aktiven Beschichtung zwischen 10 und 60 Gew.-% bezogen auf das Raumgewicht des fertigen Katalysators beträgt.

**7.** Verwendung des Katalysators nach einem der Ansprüche 1 bis 6 zur Umsetzung von Distickstoffmonoxid, welches als unerwünschtes Nebenprodukt bei der Herstellung von Salpetersäure gebildet wird, wobei ein Gemisch aus Ammoniak und Luft zuerst über einen Katalysator zur Oxidation von Ammoniak und das dabei gebildete Produktgas in direkter Folge anschließend über den Katalysator zur Umsetzung von Distickstoffmonoxid geführt wird.

**8.** Verwendung nach Anspruch 7,
**dadurch gekennzeichnet,**
**daß** als Katalysator zur Oxidation von Ammoniak ein Edelmetall-Netz-Katalysator verwendet wird.

**9.** Verwendung nach Anspruch 8,
**dadurch gekennzeichnet,**
**daß** der Katalysator zur Umsetzung von Distickstoffmonoxid als ebene Auflage für den Edelmetall-Netz-Katalysator dient.

**Claims**

**1.** Catalyst for converting dinitrogen monoxide, which contains one or more compounds of the perovskite type as catalytically active component(s) and in which the catalytically active components are applied in the form of at least one layer to a supported body composed of an open-cell foam ceramic made up of thin-walled hollow struts of a ceramic material, **characterized in that** a proportion of from 5 to 40% by weight of catalytically active component is added to the sintered mullite used as ceramic support material for making a cast of the polyurethane foam.

**2.** Catalyst according to Claim 1, **characterized in that** the foam ceramic has a porosity of 60-95% and has been obtained by making a cast of an open-cell polyurethane foam by means of a ceramic material, where the polyurethane foam had a pore size in the range from 10 to 50 ppi (pores per inch) corresponding to from 4 to 20 pores per cm.

**3.** Catalyst according to either Claim 1 or 2, **characterized in that** the hollow struts have a diameter of 100-750 $\mu$m and a wall thickness of 50-250 $\mu$m.

**4.** Catalyst according to Claim 3, **characterized in that** the density of the foam ceramic is, depending on the cell density and the wall thicknesses of the hollow struts, in the range from 0.1 to 1 kg/dm$^3$.

**5.** Catalyst according to Claim 4, **characterized in that** the catalytically active component is a compound of the perovskite type having the empirical formula $LnFeO_3$, where Ln is lanthanides selected from among La, Ce, Nd, Pr and Sm.

**6.** Catalyst according to Claim 5, **characterized in that** the weight of the active coating is in the range from 10 to 60% by weight based on the density of the finished catalyst.

**7.** Use of the catalyst according to any of Claims 1 to 6 for converting dinitrogen monoxide formed as undesirable by-product in the production of nitric acid, wherein a mixture of ammonia and air is firstly passed over a catalyst for oxidizing ammonia and the product gas formed is then directly passed over the catalyst for converting dinitrogen monoxide.

**8.** Use according to Claim 7, **characterized in that** a noble metal gauze catalyst is used as catalyst for oxidizing ammonia.

**9.** Use according to Claim 8, **characterized in that** the catalyst for converting dinitrogen monoxide serves as flat support for the noble metal gauze catalyst.

**Revendications**

**1.** Catalyseur pour la transformation d'oxyde nitreux, qui contient en tant que composants catalytiquement actifs un ou plusieurs composés de type pérovskite, les composants catalytiquement actifs étant appliqués sous la forme d'au moins une couche sur un corps support constitué d'une céramique expansée à cellules ouvertes, qui est formée par des entretoises creuses à parois minces d'un matériau céramique, **caractérisé en ce qu'**une proportion de 5 à 40 % en poids de composant catalytiquement actif est ajoutée à la mullite frittée utilisée en tant que matériau support céramique pour le moulage de la mousse de polyuréthanne.

**2.** Catalyseur selon la revendication 1, **caractérisé en ce que** la céramique expansée présente une porosité de 60 à 95 % et a été obtenue par moulage d'une mousse de polyuréthanne à cellules ouvertes avec un matériau céramique, la mousse de polyuréthanne présentant une taille de pore comprise entre 10 et 50 ppi (pores par pouce), ce qui correspond à un nombre de pores compris entre 4 et 20 pores par cm.

**3.** Catalyseur selon l'une quelconque des revendications 1 à 2, **caractérisé en ce que** les entretoises creuses présentent un diamètre de 100 à 750 $\mu$m avec une épaisseur de paroi de 50 à 250 $\mu$m.

**4.** Catalyseur selon la revendication 3, **caractérisé en ce que** la densité de la céramique expansée est comprise entre 0,1 et 1 kg/dm$^3$ en fonction de la densité cellulaire et des épaisseurs de paroi des entretoises creuses.

**5.** Catalyseur selon la revendication 4, **caractérisé en ce que** le composant catalytiquement actif est un composé de type pérovskite de formule élémentaire $LnFeO_3$, Ln désignant des lanthanides choisis parmi La, Ce, Nd, Pr et Sm.

**6.** Catalyseur selon la revendication 5, **caractérisé en ce que** le poids du revêtement actif est compris entre 10 et 60 % en poids, par rapport à la densité du catalyseur fini.

**7.** Utilisation du catalyseur selon l'une quelconque des revendications 1 à 6 pour la transformation d'oxyde nitreux, qui se forme en tant que produit secondaire indésirable lors de la fabrication d'acide nitrique, un mélange d'ammoniac et d'air étant tout d'abord passé sur un catalyseur pour l'oxydation de l'ammoniac et le produit gazeux ainsi formé étant ensuite directement passé sur le catalyseur pour la transformation de l'oxyde nitreux.

**8.** Utilisation selon la revendication 7, **caractérisée en ce qu'**un catalyseur à réseau à base de métal noble est utilisé en tant que catalyseur pour l'oxydation de l'ammoniac.

**9.** Utilisation selon la revendication 8, **caractérisée en ce** le catalyseur pour la transformation de l'oxyde nitreux sert de support plan pour le catalyseur à réseau à base de métal noble.

**Figur 1**

**Figur 2**

**Figur 3**

**Figur 4**

EP 2 145 663 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9907638 A1
- WO 00023176 A1
- WO 02002230 A1
- US 7192566 B2
- DE 102004024026 A1
- DE 19841740 A1
- DE 10328278 A1

- WO 2007104403 A1
- US 2005201906 A
- EP 1408018 A
- WO 9737760 A
- US 4774217 A
- WO 2004096703 A
- US 3090094 A

**In der Beschreibung aufgeführte Nicht-Patentliteratur**

- **J. Adler ; G. Standke.** Offenzellige Schaumkeramik, Teil 1. *Keramische Zeitschrift,* 2003, vol. 55 (9

- **A. Reitzmann ; F. C. Patcas ; B. Kraushaar-Czar-netzki.** Keramische Schwämme - Anwendungspotenzial monolithischer Netzstrukturen als katalytische Packungen. *Chemie Ingenieur Technik,* 2006, vol. 78 (7